(19) **Europäisches Patentamt / European Patent Office / Office européen des brevets**

(11) **EP 4 548 515 B1**

(12) # EUROPEAN PATENT SPECIFICATION

(45) Date of publication and mention of the grant of the patent:
**18.03.2026 Bulletin 2026/12**

(21) Application number: **23764511.4**

(22) Date of filing: **08.08.2023**

(51) International Patent Classification (IPC):
**H04L 1/08** (2006.01)      **H04L 1/1829** (2023.01)
**H04L 1/1867** (2023.01)

(52) Cooperative Patent Classification (CPC):
**H04L 1/08; H04L 1/1854; H04L 1/1858;
H04L 1/1864; H04L 1/1896**

(86) International application number:
**PCT/US2023/071843**

(87) International publication number:
**WO 2024/036150 (15.02.2024 Gazette 2024/07)**

(54) **RELIABILITY ENHANCEMENT FOR MSG4 TRANSMISSION**

ZUVERLÄSSIGKEITSVERBESSERUNG FÜR MSG4-ÜBERTRAGUNG

AMÉLIORATION DE LA FIABILITÉ POUR LA TRANSMISSION DU MSG4

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **09.08.2022 US 202263370799 P**

(43) Date of publication of application:
**07.05.2025 Bulletin 2025/19**

(73) Proprietor: **Apple Inc.
Cupertino CA 95014 (US)**

(72) Inventors:
• **YE, Chunxuan
  San Diego, California 92121 (US)**
• **ZHANG, Dawei
  Sunnyvale, California 94085 (US)**
• **ZENG, Wei
  Sunnyvale, California 94085 (US)**
• **SUN, Haitong
  Sunnyvale, California 94085 (US)**
• **YANG, Weidong
  San Diego, California 92121 (US)**
• **YAO, Chunhai
  Beijing 100022 (CN)**
• **FAKOORIAN, Seyed Ali Akbar
  San Diego, California 92121 (US)**
• **ZHANG, Yushu
  Beijing 100022 (CN)**
• **HE, Hong
  Sunnyvale, California 94085 (US)**
• **YE, Sigen
  San Diego, California 92121 (US)**
• **LIU, Ruoheng
  San Diego, California 92131 (US)**
• **NINACS, Tudor
  80335 Munich (DE)**
• **ISCAN, Onurcan
  80335 Munich (DE)**
• **ZHANG, Wenshu
  Cupertino, California 95014 (US)**
• **ZHANG, Dan
  San Diego, California 92131 (US)**
• **FARAJIDANA, Amir
  Cupertino, California 95014 (US)**

(74) Representative: **Rooney, John-Paul
Withers & Rogers LLP
2 London Bridge
London SE1 9RA (GB)**

(56) References cited:
**WO-A1-2021/231816      WO-A1-2022/061881
WO-A1-2022/151376      US-A1- 2021 251 016
US-A1- 2022 210 806**

- **ERICSSON: "Random access for Rel-13 low complexity and enhanced coverage UEs", vol. RAN WG2, no. Beijing, P.R. China; 20150824 - 20150828, 23 August 2015 (2015-08-23), XP051040232, Retrieved from the Internet <URL:http://www.3gpp.org/ftp/ Meetings_3GPP_SYNC/RAN2/Docs/> [retrieved on 20150823]**

## Description

TECHNICAL FIELD

This application relates generally to wireless communication systems, including enhancements for Msg4 PDSCH and Msg4 HARQ-ACK.

BACKGROUND

Wireless mobile communication technology uses various standards and protocols to transmit data between a base station and a wireless communication device. Wireless communication system standards and protocols can include, for example, 3rd Generation Partnership Project (3GPP) long term evolution (LTE) (e.g., 4G), 3GPP new radio (NR) (e.g., 5G), and IEEE 802.11 standard for wireless local area networks (WLAN) (commonly known to industry groups as Wi-Fi®).

As contemplated by the 3GPP, different wireless communication systems standards and protocols can use various radio access networks (RANs) for communicating between a base station of the RAN (which may also sometimes be referred to generally as a RAN node, a network node, or simply a node) and a wireless communication device known as a user equipment (UE). 3GPP RANs can include, for example, global system for mobile communications (GSM), enhanced data rates for GSM evolution (EDGE) RAN (GERAN), Universal Terrestrial Radio Access Network (UTRAN), Evolved Universal Terrestrial Radio Access Network (E-UTRAN), and/or Next-Generation Radio Access Network (NG-RAN).

Each RAN may use one or more radio access technologies (RATs) to perform communication between the base station and the UE. For example, the GERAN implements GSM and/or EDGE RAT, the UTRAN implements universal mobile telecommunication system (UMTS) RAT or other 3GPP RAT, the E-UTRAN implements LTE RAT (sometimes simply referred to as LTE), and NG-RAN implements NR RAT (sometimes referred to herein as 5G RAT, 5G NR RAT, or simply NR). In certain deployments, the E-UTRAN may also implement NR RAT. In certain deployments, NG-RAN may also implement LTE RAT.

A base station used by a RAN may correspond to that RAN. One example of an E-UTRAN base station is an Evolved Universal Terrestrial Radio Access Network (E-UTRAN) Node B (also commonly denoted as evolved Node B, enhanced Node B, eNodeB, or eNB). One example of an NG-RAN base station is a next generation Node B (also sometimes referred to as a g Node B or gNB).

A RAN provides its communication services with external entities through its connection to a core network (CN). For example, E-UTRAN may utilize an Evolved Packet Core (EPC), while NG-RAN may utilize a 5G Core Network (5GC).

The following documents are relevant: US 2022/210806 A1 which discusses uplink data transmission for random access of reduced capability device, WO 2021/231816 A1 which discusses initial access for reduced capability new radio devices, WO 2022/061881 A1 which discusses indication of TBS scaling and repetition for MSG4 PDSCH, WO 2022/151376 A1 which discusses an indication method and an apparatus for blind retransmission of random access message, US 2021/251016 A1 which discusses aggregation indication for uplink transmission during random access channel procedures, and 3GPP DRAFT; R2-153717; ERICSSON; which discusses random access for Rel-13 low complexity and enhanced coverage UEs

BRIEF DESCRIPTION OF THE SEVERAL VIEWS OF THE DRAWINGS

To easily identify the discussion of any particular element or act, the most significant digit or digits in a reference number refer to the figure number in which that element is first introduced.

FIG. 1 illustrates an NTN architecture of a wireless communication system, according to an embodiment.

FIG. 2 illustrates an NTN architecture of a wireless communication system, according to an embodiment.

FIG. 3 illustrates a signaling diagram of a RACH procedure in accordance with some embodiments.

FIG. 4 illustrates a method for a UE in accordance with some embodiments.

FIG. 5 illustrates a method for a network node in accordance with some embodiments.

FIG. 6 illustrates an example architecture of a wireless communication system, according to embodiments disclosed herein.

FIG. 7 illustrates a system for performing signaling between a wireless device and a RAN device connected to a core network of a CN device, according to embodiments disclosed herein.

DETAILED DESCRIPTION

The invention is set out by the appended independent claims.

Various embodiments are described with regard to a UE. However, reference to a UE is merely provided for illustrative purposes. The example embodiments may be utilized with any electronic component that may establish a connection to a network and is configured with the hardware, software, and/or firmware to exchange information and data with the network. Therefore, the UE as described herein is used to represent any appropriate electronic component.

One of the goals of a communication system is to increase coverage while avoiding interference. One technique that may be employed to increase coverage is the use of a non-terrestrial network (NTN). As the number of mobile devices using a wireless network and demand for mobile traffic continue to increase, the use of a NTN may be employed to facilitate the burgeoning demand. For example, wireless communication networks such as 5G new radio (NR) networks may be enhanced using satellites as part of a NTN. In one deployment scenario of a NTN, a satellite referred to as a transparent satellite may act as a relay station to link user devices with a ground-based base station and the NR core network by implementing a transparent payload. In another deployment scenario, a satellite referred to as a regenerative satellite may have onboard processing capability to perform the functions of a base station by implementing a regenerative payload between the user devices and the ground-based NR core network.

Introduction of a NTN may increase a coverage area of a wireless network. However, the long distances between a satellite and a user device, large coverage of a satellite, and interference between the NTN and a terrestrial network may present obstacles for reliability of the NTN. Enhancements for NR NTN described herein may provide greater coverage and reliability.

For example, coverage enhancements for NR NTN may cover the use case of voice and low-data rate services using commercial smartphones with more realistic assumptions on antenna gains instead of 0dBi currently assumed for link budget analysis for non-terrestrial networks. Additionally, some embodiments take into account related regulatory requirements. For example, the International Telecommunication Union (ITU) has specified a limitation of power flux density (PFD). Such limitations attempt to prevent terrestrial networks from being interfered with by NTNs if a same band is used. Accordingly, an evaluation of the coverage performance may identify candidate physical radio channels that have coverage issues specific to NTN for voice over Internet Protocol (VoIP) and low-data rate services for commercial handset terminals.

The limitation of PFD may create downlink channel may have some coverage issues specific to the NTN environment. For example, a communication network may consider pairing of 1610 - 1618.725 MHz uplink (L-band) and 2483.5 - 2500 MHz downlink (S-band). The core functionality may be forward compatible with mixed pairing. However, there are PFD limitations on the S-band.

For S-band 2483.5-2500 MHz downlink for mobile-satellite service, the following criteria regulations for PFD may create downlink channel limitations for a NTN:

$$PFD = P, \text{ for } 0° \leq \delta \leq 5°;$$

$$PFD = P + r(\delta - 5), \text{ for } 5° \leq \delta \leq 25°;$$

and

$$PFD = P + 20r, \text{ for } 25° \leq \delta \leq 90°,$$

where $\delta$ is the elevation angle, and P is a parameter as specified below.

A geosynchronous Orbit (GSO) space station has PFD: P = -146 dB (W/m$^2$) in 4 kHz and -128 dB (W/m$^2$) in 1 MHz, with r=0.5. Further, a non-GSO space station has PFD: P=-144 dB (W/m$^2$) in 4 kHz and -126dB (W/m$^2$) in 1MHz, with r = 0.65. Additionally for a non-GSO space station, depending on regions, P=-142.5 dB (W/m$^2$) in 4 kHz and -124.5 dB (W/m$^2$) in 1MHz.

Based on the PFD limitation, the downlink transmission power (or EIRP) in 2483.5-2500 MHz band may not be large enough to cover the whole cell of a satellite. Accordingly, the downlink channel may need coverage enhancements. Some embodiments herein provide downlink channel enhancements for NTN.

A random access channel (RACH) procedure including at least a first message (Msg1), a second message (Msg2), a third message (Msg3), and a fourth message (Msg4) to communicate between the UE and a network node

Uplink data transmission includes MSG3. In NR Release-17 (Rel-17), the Type A Physical Uplink Shared Channel (PUSCH) repetition for Msg3 was supported to enhance uplink data transmission. A user equipment (UE) determines Msg3 PUSCH repetition is needed when Reference Signal Received Power (RSRP) of the downlink pathloss reference is low. The UE uses separate preamble with shared random-access channel (RACH) occasion and/or separate RACH occasions for requesting Msg3 PUSCH repetition. The network node decides whether to schedule Msg 3 PUSCH repetition, if it is requested by UE. For indication of Msg3 PUSCH repetition, a Modulation and Coding Scheme (MCS) information field is used. The two most significant bits (MSB) of the MCS field are used to select one repetition factor from System Information Block Type 1 (SIB1) configured set with four candidate values. The two least significant bits (LSB) of the MCS field is used to select one MCS value from SIB1 configured set with four candidate values.

Msg3 repetition occasion availability may be determined by *tdd-UL-DL-ConfigurationCommon* and *ssb-PositionsInBurst*. If a symbol for Msg3 repetition occasion overlaps with Synchronization Signal Block (SSB) transmission or downlink (DL) symbol, then occasion is not counted toward number of Msg3 repetition. Flexible symbols can be considered as available symbols for Msg 3 PUSCH repetition. Additionally, Msg 3 PUSCH collision handling has been considered. In NR REI-15/16 Msg3 PUSCH collision handling rules are reused for transmission of Msg3 PUSCH repetition in an available slot. Further, for Msg3 redundant version (RV) determination, RV of the first repetition is RV 0, the system may use a fixed RV sequence [0 2 3 1] for repetition of Msg3 repetition, and RV cycling for Msg3 PUSCH repetition is based on transmission occasions. Msg3 PUSCH repetition with frequency hopping supports only inter-slot frequency hopping, based on uplink Random Access Response (UL RAR) grant.

While these coverage enhancements to Msg 3 provide more reliable uplink communication, the downlink communication is still susceptible to coverage limitations. Embodiment herein may be employed to enhance the coverage of Msg4 transmissions in NTN. Some embodiments describe enhancements to coverage of Msg4 Physical Downlink Shared Channel (PDSCH) transmission. More specifically, some embodiments introduce Msg4 PDSCH repetition in NTN. Some embodiments specify triggering of Msg4 PDSCH repetition, details about Msg4 PDSCH repetition, signaling of Msg4 PDSCH repetition, and downlink control information (DCI) enhancements. Some embodiments apply fixed field values of DCI format 1_0 for Msg4 transmission to achieve better coding gain.

Some embodiments herein describe enhancements to the coverage of Msg4 Hybrid Automatic Repeat Request Acknowledge (HARQ-ACK) transmission. More specifically, some embodiments introduce HARQ-ACK repetition in NTN. Some embodiments specify triggering of Msg4 HARQ-ACK repetition, signaling of Msg4 HARQ-ACK repetition, and bundling of Msg 4 HARQ-ACK repetition with Demodulation Reference Signal (DMRS).

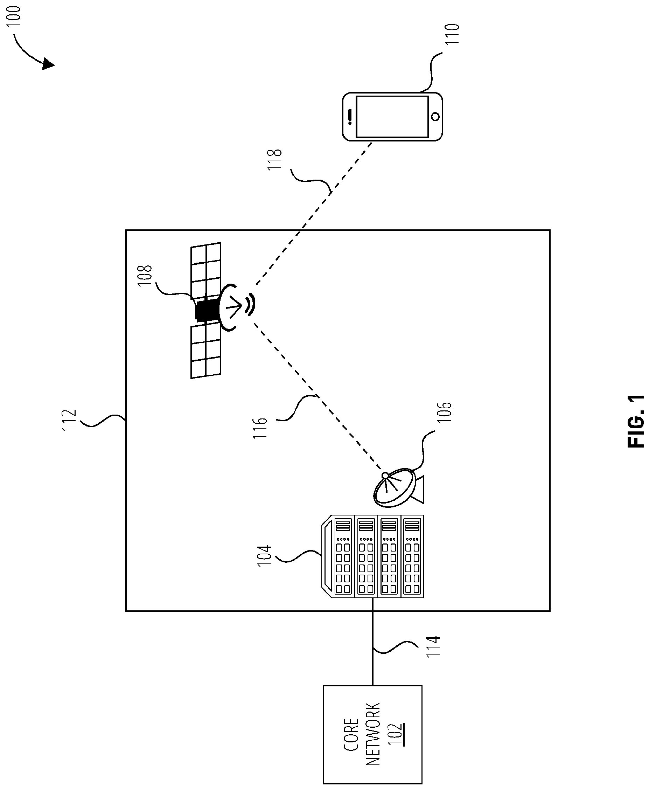

FIG. 1 illustrates a non-terrestrial network (NTN) architecture 100 of a wireless communication system, according to an embodiment. The NTN architecture 100 includes a core network (CN) 102, a terrestrial base station 104, a satellite gateway 106, a satellite 108, and a UE 110. The terrestrial base station 104, the satellite gateway 106, and the satellite 108 may be included in a RAN 112.

In some embodiments, the RAN 112 includes E-UTRAN, the CN 102 includes an EPC, and the terrestrial base station 104 includes an eNB. In these cases, the CN link 114 connecting the CN 102 and the terrestrial base station 104 may include an S1 interface.

In some embodiments, RAN 112 includes NG-RAN, the CN 102 includes a 5GC, and the terrestrial base station 104 includes a gNB or a next generation eNB (ng-eNB). In such cases, the CN link 114 connecting the CN 102 and the terrestrial base station 104 may include an NG interface.

The NTN architecture 100 illustrates a "bent-pipe" or "transparent" satellite based architecture. In such bent-pipe systems, the terrestrial base station 104 uses the satellite gateway 106 to communicate with the satellite 108 over a feeder link 116. The satellite 108 may be equipped with one or more antennas capable of broadcasting a cell according to the RAN 112, and the UE 110 may be equipped with one or more antennas (e.g., a moving parabolic antenna, an omni-directional phased-array antenna, etc.) capable of communicating with the satellite 108 via a Uu interface on that cell (such communications may be said to use the illustrated service link 118). A payload sited on the satellite 108 then transparently forwards data between the satellite gateway 106 and the UE 110 using the feeder link 116 between the satellite gateway 106 and the satellite 108 and the service link 118 between the satellite 108 and the UE 110. The payload may perform RF conversion and/or amplification in both uplink (UL) and downlink (DL) to enable this communication.

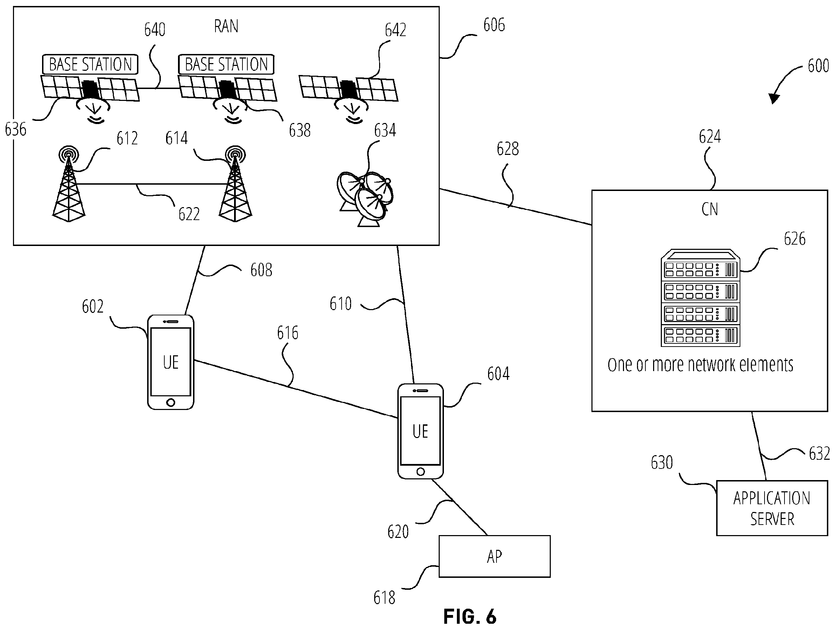

In the embodiment shown in FIG. 1, the terrestrial base station 104 is illustrated without the capability of terrestrial wireless communication directly with a UE. However, it is contemplated that in other embodiments, such a terrestrial base station using the satellite gateway 106 to communicate with the satellite 108 could (also) have this functionality (i.e., as in the terrestrial base station 612 and the terrestrial base station 614 of FIG. 6, to be described below).

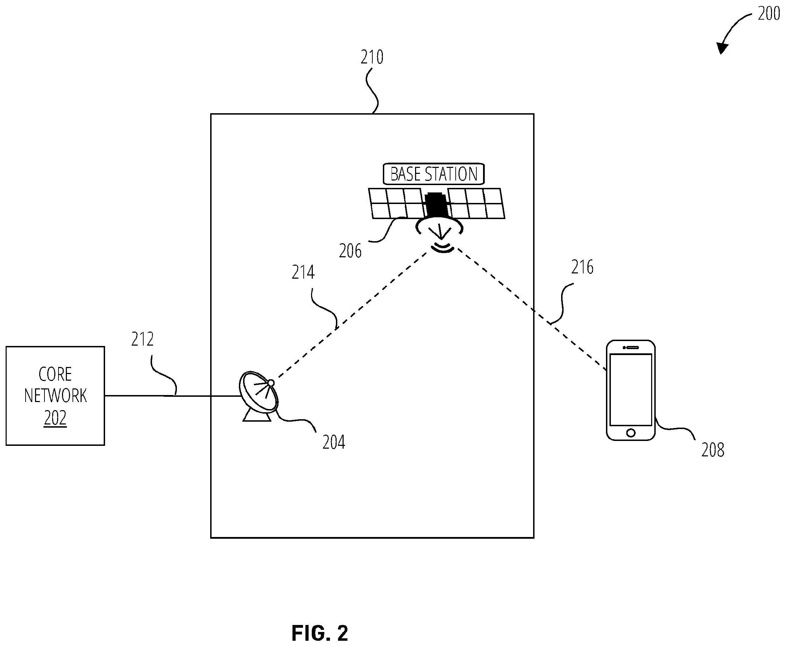

FIG. 2 illustrates an NTN architecture 200 of a wireless communication system, according to an embodiment. The NTN architecture 200 includes a CN 202, a satellite gateway 204, a satellite base station 206, and a UE 208. The satellite gateway 204 and the satellite base station 206 may be included in the RAN 210.

In some embodiments, the RAN 210 includes E-UTRAN and the CN 202 includes an EPC. In these cases, the CN link 212 connecting the CN 202 and the satellite gateway 204 may include an S1 interface.

In some embodiments, RAN 210 includes NG-RAN and the CN 202 includes a 5GC. In such cases, the CN link 212 connecting the CN 202 and the satellite gateway 204 may include an NG interface.

The NTN architecture 200 implements a "regenerative" satellite based architecture. In such regenerative systems, the functionalities of a base station are sited on the satellite base station 206, and the communications between these base station functions and the CN 202 occur through a forwarding of interface(s) (e.g., a S1 interface and/or an NG interface) found on the CN link 212 through the satellite gateway 204 and a feeder link 214 to the satellite base station 206. The satellite base station 206 may be equipped with one or more antennas capable of broadcasting a cell according to the RAN 210, and the UE 208 may be equipped with one or more antennas (e.g., a moving parabolic antenna, an omni-directional phased-array antenna, etc.) capable of communicating with the satellite base station 206 via a Uu interface on that cell (such communications may be said to use the illustrated service link 216). A payload sited on the satellite base station 206 then forwards data between the satellite gateway 204 and the UE 208 using the feeder link 214 between the satellite gateway 204 and the satellite base station 206 and the service link 216 between the satellite base station 206 and the UE 208. The payload may perform RF conversion and/or amplification in both uplink (UL) and downlink (DL) to enable this communication, as well as implement the functionalities of the base station (e.g., as an eNB, ng-eNB or a gNB, as corresponding to the type of the RAN 210) as these have been sited on the satellite base station 206.

In embodiments of NTN architectures comprising NG-RAN that also use integrated access and backhaul (IAB), it is possible that a gNB control unit functionality (CU) could be sited terrestrially and may use a satellite gateway to communicate with a satellite that hosts a corresponding gNB donor unit functionality (DU), with the F1 interface(s) between the CU and the DU underpinned by the feeder link 214. In such cases, the CU and the DU may each be understood to be part of the NG-RAN.

Characteristic differences of NTNs versus terrestrial networks may include relatively larger propagation delays and the potential for movement of the satellite relative to a current position of a UE. Accordingly, improvements to wireless communications systems may be intended to help to alleviate undesirable effects stemming from these circumstances. Such improvements may respond to the need to improve various services provided to a UE by an NTN (e.g., voice service, data service) in view of real-world characteristics of NTN performance (e.g., as opposed to an idealized case). Such improvements to NTN use may be arranged to account for relevant regulatory restrictions, such as (for example) limitations on power flux density (PFD) at surface/ground level as established by the International Telecommunications Union (ITU). It will be understood that in some circumstances, such improvements may be achieved (at least in part) via a particular use of one or more physical radio channels in a way that helps to alleviate these and other NTN-related issues.

In some instances, pairing of the L-band (e.g., 1,610 megahertz (MHz) to 1,618.775 MHz) and the S-band (e.g., 2,483.5 MHz to 2,500 MHz) may be considered. For example, it may be that the L-band may be used for UL between a satellite and a UE while the S-band may be used for DL between the satellite and the UE.

A PFD limitation on the use of this S-band may be applicable according to various regulations. For example, as applicable in a mobile-satellite service context in in the 2,483.5 MHz to 2,500 MHz range, a PFD limitation may be expressed in terms of the PFD calculation factors $P$ (expressed in dB (W/m$^2$) per MHz or per $X$ kilohertz (kHz)) and r (expressed in dB/degree). Values for these PFD calculation factors may depend on whether a satellite is a GSO satellite or a non-GSO satellite. The appropriate values for the PFD calculation factors may be applied in a defined way relative to an angle of arrival above the horizontal plane (relative to a location on the earth's surface) $\delta$ (in degrees) to arrive at the PFD limitation.

For example, a satellite in a geostationary orbit (GSO) may correspond to PFD calculation factors $P$ = -146 dB (W/m$^2$) in 4 kHz or -128 dB (W/m$^2$) in 1 MHz and $r$ = 0.5 dB/degree, while a satellite in a non-GSO may correspond to parameters $P$ = -144 dB (W/m$^2$) in 4 kHz or -126 dB (W/m$^2$) in 1 MHz and $r$ = 0.65 dB/degree. In some regions, a satellite in a non-GSO may instead use $P$ = -142.5 dB (W/m$^2$) in 4 kHz and -124.5 dB (W/m$^2$) in 1 MHz.

Then, using the appropriate PFD calculation factors P and r according to the applicable satellite information, a PFD limitation relative to the satellite can be calculated according to the applicable $\delta$ between a UE location and the satellite using:

$$PFD = P, \text{ for } 0° \leq \delta \leq 5°;$$

$$PFD = P + r(\delta - 5), \text{ for } 5° \leq \delta \leq 25°;$$

and

$$PFD = P + 20r, \text{ for } 25° \leq \delta \leq 90°.$$

Within such PFD constraints as calculated, it may be that DL transmission power (or effective isotropic radiated power (EIRP)) in the 2,483.5 MHz to 2,500 MHz range cannot be large enough to cover the entire geographic cell of the satellite with strong coverage.

Accordingly, the use of embodiments described herein may, for example, enhance the DL coverage experienced by a UE within the cell of the satellite when such circumstances as described here are applicable.

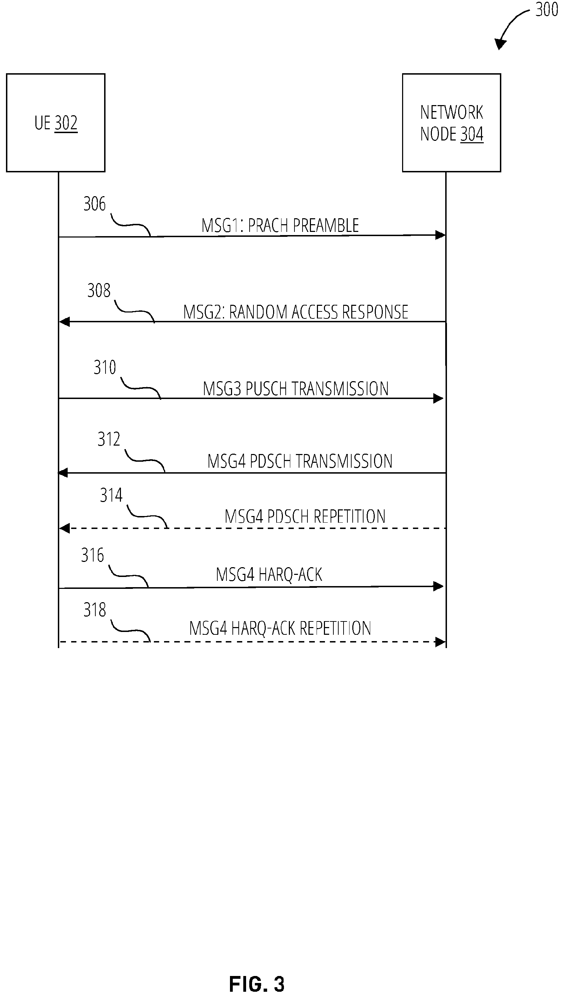

FIG. 3 illustrates a signaling diagram 300 of a RACH procedure. As shown, the UE 302 may transmit a Msg1 transmission 306 to the network node 304. The Msg1 transmission 306 may include a physical random access channel (PRACH) preamble including timing information for uplink transmissions.

In response to receiving Msg1 transmission 306, the network node 304 may transmit a Msg2 transmission 308 on PDCCH or PDSCH. The Msg2 transmission 308 may also be referred to as a random access response (RAR) message. The Msg2 transmission 308 may include timing parameters or information, an uplink grant for the Msg3 transmission 310, a temporary cell radio network temporary identifier (TC-RNTI), etc.

In response to the Msg3 transmission 310, the network node 304 may transmit a Msg4 PDSCH transmissions 312 that may comprise a contention resolution message. After the UE 302 sends Msg3 transmission 310, a contention resolution timer starts. The network node 304 assists the UE 302 in contention resolution using the C-RNTI on the PDCCH or using the UE 302 Contention Resolution Identity IE on the PDSCH. The UE 302 keeps monitoring the PDCCH before the timer expires and considers the contention resolution successful and stops the timer if the UE 302 obtains the C-RNTI over the PDCCH, or the UE obtains the temporary C-RNTI over the PDCCH and the MAC PDU is successfully decoded. If the contention resolution timer expires, the UE 302 considers the contention resolution failed.

To enhance coverage of the Msg4 PDSCH transmission 312, the network node 304 applies repetition to the Msg4 PDSCH Msg4 PDSCH transmission 312. In particular, the network node 304 transmits one or more Msg4 PDSCH repetitions 314. Msg4 PDSCH repetition 314 allows the network node 304 to re-transmit the contention resolution information that was sent via the Msg4 PDSCH transmission 312 at a different time. That way, if the UE 302 fails to receive the Msg4 PDSCH transmission 312 due to interference, the UE 302 will have additional opportunities to receive the Msg4 information.

If the UE 302 sends a trigger to the network node for Msg4 PDSCH repetition, the network node 304 determines that Msg4 PDSCH repetition 314 should be sent.
Triggering of Msg4 PDSCH repetition 314 may be done using RACH procedure transmissions.

For example, in some embodiments, a trigger for Msg4 PDSCH repetition may be bundled with a dedicated PRACH preamble which requests the Msg4 PDSCH repetition. For example, the trigger may be sent by the UE 302 to the network node 304 via the Msg1 transmission 306. In these embodiments, if the UE 302 sends dedicated PRACH preamble which requests Msg4 PDSCH repetition, then the network node 304 applies the Msg4 PDSCH repetition; otherwise, the network node 304 does not apply Msg4 PDSCH repetition. In some embodiments, the dedicated PRACH preamble triggers both Msg2 and Msg4 PDSCH repetition. In some embodiments, the dedicated PRACH preamble only triggers Msg4 PDSCH repetition. In some embodiments, different PRACH preambles may correspond to different numbers of Msg4 PDSCH repetitions.

In some embodiments, the trigger for Msg4 PDSCH repetition may be bundled with dedicated RACH occasions which request the Msg4 PDSCH repetition. A RACH Occasion is an area specified in time and frequency domains that is available for the reception of the PRACH. For example, if the UE 110 sends a PRACH transmission on a designated RACH occasion, that may trigger the network node 304 to perform Msg4 PDSCH repetition. In these embodiments, if the UE 302 sends PRACH on dedicated RACH occasions which request Msg4 PDSCH repetition, then the network node 304 applies Msg4 PDSCH repetition; otherwise, the network node 304 does not apply Msg4 PDSCH repetition. In some embodiments, a dedicated RACH occasion may trigger both Msg2 and Msg4 PDSCH repetition. In some embodiments, a dedicated RACH occasion only triggers Msg4 PDSCH repetition. In some embodiments, different RACH occasions may correspond to different numbers of Msg4 PDSCH repetitions.

In some embodiments, the trigger for Msg4 PDSCH repetition may be bundled with a Msg2 repetition request. For example, if Msg2 PDSCH repetition is requested by the UE 302 and applied by the network node 304, the network node 304 may also apply Msg4 PDSCH repetition. If Msg2 PDSCH repetition is not requested or applied, the network node 304 may not apply Msg4 PDSCH repetition. There may be one-to-one mapping between the number of Msg2 PDSCH repetitions and the number of Msg4 PDSCH repetitions. For example, in some embodiments, the Msg4 PDSCH repetition number is 2 or 4 if Msg2 PDSCH repetition number is respectively 2-4 or 5-7.

The Msg4 PDSCH repetition may be slot level repetition. In some embodiments, the same time and frequency resources may be used across the slots. For example, the network node 304 may send the Msg4 PDSCH repetition 314 and any additional repetitions using the same time and frequency resources as was used by the Msg4 PDSCH transmission 312.

The Msg4 PDSCH repetitions may have a time overlap in a slot with SSB transmission, CORESET, or uplink slots. In some embodiments, a Msg4 PDSCH repetition occasion corresponding to an overlap is not counted. That is, the network node 304 may maintain the same number of repetitions just delay the transmission one slot due to the conflict. In some embodiments, a Msg4 PDSCH repetition occasion corresponding to an overlap is dropped. A dropped repetition occasion can result in the number of repetitions sent by the network node 304 to be reduced. In some embodiments, flexible symbols can be considered as available symbols.

Additionally, the RV used in Msg4 repetition may be determined by the UE 302 and the network node 304. In some embodiments, the RV cycle with (fixed [0 2 3 1] or configurable RV sequence) is applied on Msg4 PDSCH repetition where the initial RV version is 0. RV cycling for Msg4 PDSCH repetition may be based on a transmission occasion or based on the actual repetition. In some embodiments, the RV version is always 0 for Msg4 PDSCH repetition. In some embodiments, the RV is configurable such that either 1) the RV cycle with (fixed [0 2 3 1] or configurable RV sequence) is applied on Msg4 PDSCH repetition where the initial RV version is 0; or 2) the RV version is always 0 for Msg4 PDSCH repetition.

After the UE 302 receives the Msg4 PDSCH transmission 312 and any repetitions, The UE 302 sends a Msg4 HARQ-ACK 316 to the network node 304.
The HARQ-ACK timing is adjusted for Msg4 PDSCH repetitions. In some embodiments, the Physical Uplink Control Channel (PUCCH) slot for HARQ-ACK transmission starts at n+K1, where n is the slot in which Msg4 PDSCH is received and K1 is indicated by DCI format 1_0 field "dl-DataToUL-ACK." In some embodiments, if Msg4 PDSCH repetition is applied, the reference slot n may be defined as a last nominal PDSCH transmission slot. The last nominal PDSCH transmission slot refers to the last scheduled slot even if that PDSCH is dropped due to conflict with semi-static uplink slots. In some embodiments, if Msg4 PDSCH repetition is applied, the reference slot n may be defined as a last actual PDSCH transmission slot (e.g., the slot where the last PDSCH transmission is found).

Additionally, the UE 302 may require processing time between the Msg4 PDSCH repetition 314 and the Msg4 HARQ-ACK 316. In some embodiments a minimum time between the last symbol of the last PDSCH repetition and the first symbol of the corresponding PUCCH transmission with HARQ-ACK information may be equal to $N_{T,1}$+0.5 ms. $N_{T,1}$ is a time duration of $N_1$ symbols corresponding to a PDSCH processing time for UE processing capability one (1) when additional PDSCH DMRS is configured. In some embodiments, for u=0, $N_{1,0}$=14. The minimum time could be $N_{T,1}$+Y ms, where Y depends on number of Msg4 PDSCH repetitions. In these embodiments, the larger number of Msg4 PDSCH repetitions, the larger number of Y value.

The network node 304 may signal details regarding Msg4 PDSCH repetition to the UE 302. In some embodiments, the network node 304 may use a Modulation and Coding Scheme (MCS) indication to inform the UE 302 of details regarding Msg4 PDSCH repetition. For example, the network node 304 may use a number (X) of most significant bits (MSB) of the MCS field in DCI 1_0 for Msg4 to indicate the number of Msg4 PDSCH repetitions. In some embodiments, the MSB may be a direct indication of the number of repetitions. A direct indication may indicate between 1 and 2^X repetitions, where X is the number of MSB designated to indicate the repetitions. In some embodiments, the network node 304 may use a SIB to configure a table of Msg4 PDSCH repetitions and the X number of MSB of MCS field in DCI 1_0 may be used to indicate the table entry index. The same or different table may be configured for Msg2/MsgB PDSCH repetitions and/or Msg4 PDSCH repetitions.

In some embodiments, the network node 304 may use a PDSCH time domain resource assignment (TDRA) indication to inform the UE 302 of details regarding Msg4 PDSCH repetition. In some embodiments, the network node 304 may use an SIB to configure a new TDRA table for Msg4 PDSCH configuration. Each table entry may include the number of repetitions. The same or different TDRA tables could be for Msg 4 PDSCH configuration or Msg2/MsgB PDSCH configuration. In some embodiments, the SIB may modify or extend an existing cell specific TDRA table (e.g., for *PDSCH-configCommon* with *PDSCH-TimeDomainResourceAllocation*). Each table entry may include the number of repetitions. The DCI format 1_0 for Msg4 may indicate the TDRA table entry.

In some embodiments, the network node 304 may use a new field in DCI 1_0 format to inform the UE 302 of details regarding Msg4 PDSCH repetition. The new field may explicitly indicate the number of repetitions, or a SIB may configure a Msg4 PDSCH repetition table and the field in DCI 1_0 indicates the table entry.

In some embodiments, the Msg4 PDCCH may also be enhanced. For example, fixed fields of DCI 1_0 format for Msg4 PDCCH (cyclic redundancy check (CRC) masked with Temporary Cell radio network temporary identifier (TC-RNTI)) may be used. Certain fields of DCI 1_0 format for Msg4 may have fixed values. For example, a there may be a certain number of least significant bits (LSBs) or MSBs of the MCS field, "TDRA" field, and/or HARQ process number field, etc. This may enhance the decoding of the PDCCH. In some embodiments, the fixed fields may be triggered by a dedicated PRACH preamble or dedicated RACH occasion. This may enhance the decoding of the PDCCH. In some embodiments, the fixed fields may be triggered by a Msg2 PDCCH explicit indication. For example, one bit in DCI 1_0 of Msg2 may indicate that DCI 1_0 of Msg4 has fixed-fields. In some embodiments, the fixed fields may be requested in Msg 3 PUSCH.

The Msg4 HARQ-ACK 316 allows the UE 302 to provide feedback regarding the Msg4 PDSCH transmission 312. To enhance the Msg4 HARQ-ACK 316, the wireless communication system may support the UE sending one or more Msg4 HARQ-ACK repetitions 318. The Msg4 HARQ-ACK repetition 318 comprises the UE repeatedly transmitting the Msg4 HARQ-ACK on the PUCCH. That way, if the UE 302 fails to receive the Msg4 PDSCH transmission 312 due to interference, the UE 302 will have additional opportunities to receive the Msg4 information.

In some embodiments, the PUCCH repetition may be triggered based on the Msg4 PDSCH repetition 314. For instance, the trigger for the Msg4 HARQ-ACK repetition 318 may be bundled with the Msg4 PDSCH repetition 314. If the number of Msg4 PDSCH repetitions 314 is larger than one, then PUCCH repetition for the Msg4 HARQ-ACK for the Msg4 PDSCH transmission may be applied using the value configured in "nrofSlots" variable.

In some embodiments, the PUCCH repetition may be triggered by a dedicated PRACH preamble or RACH occasions. In these embodiments, the UE may request the PUCCH repetition. If the UE sends a dedicated PRACH preamble and/or a transmission on dedicated RACH occasions, then PUCCH repetition is applied using the value configured in "nrofSlots" variable.

In some embodiments, the PUCCH repetition is bundled with Msg3 repetition number. For example, the two most significant bits of the MCS field in RAR grant may indicate the PUCCH repetition.

The network node 304 may signal details of Msg4 HARQ-ACK repetition 318 to the UE 302. In some embodiments, the network node may send the details regarding HARQ-ACK repetition via a cell-specific PUCCH configuration information element (e.g., cell-specific "PUCCH-ConfigCommon"). The cell-specific PUCCH configuration may include a new field that includes a variable (e.g. "nrofSlots") that indicates the number of slot repetitions for the Msg4 HARQ-ACK repetition 318. In some embodiments, the slot repetition field may be a single value (e.g., 2, 4, 8). In some embodiments, the slot repetition field may be a list of values.

In some embodiments, the network node 304 may indicate the number of PUCCH repetition in DCI 1_0 for Msg 4. For example, an explicit bit in DCI 1_0 may indicate the PUCCH repetition is applied using the value configured in "nrofSlots." If the slot repetition field is a list of values, explicit bits in DCI 1_0 may indicate the index of the listed values configured in "nrofSlots".

In some embodiments, the PUCCH repetition may be autonomously applied based on another RACH signal. For example, PUCCH repetition may autonomously applied when dedicated PRACH preambles or dedicated RACH occasions is transmitted, or Msg2 repetition, Msg3 repetition, Msg4 repetition is activated.

In some embodiments, Msg4 HARQ-ACK repetition with DMRS bundling may be used to enhance Msg4. For DMRS a time domain window (TDW) may be specified. During the TDW, a UE is expected to maintain power consistency and phase continuity among PUCCH repetitions as HARQ-ACK for Msg4. Network node 304 may configure maximum value (L) of TWD length of configured TDW. The network node 304 may broadcast the maximum value of TDW length to the UE 302 using the SIB. The UE 302 may report a maximum duration (K) that indicates how many symbols the UE 302 may maintain power consistency and phase continuity. In some embodiments, the UE 302 may report to the network node 304 in Msg3 its capability of maximum duration during which UE 302 is able to maintain power consistency and phase continuity. Further, the UE 302 may report in Msg 3 its capability of restarting DRMS bundling. The configured TDW may be the minimum of L and K (e.g., the minimum of the UE 302 or network node 304 defined parameters).

In some embodiments, actual TDWs (e.g., the actual time domain window used) may split the configured TDW. In other words, within one configured TDW, one or multiple actual TDWs can be implicitly determined. If power consistency and phase continuity are violated due to an event, whether a new actual TDW is created is subject to UE capability of supporting restarting DMRS bundling. The DMRS bundling may be per actual TDW. The TDW for counting may be based on physical slots or based on available slots. Whether physical slots or available slots are used may be based on the configuration.

An event that violates power consistence and phase continuity may include a downlink slot or downlink repetition/monitoring that is based on semi-static downlink/uplink configuration for unpaired spectrum. For example, a SIB during which the UE 302 may not transmit during that slot because UE 302 needs an uplink slot for Msg4 HARQ-ACK 316. Another event that violates power consistency and phase continuity includes when a gap between two PUCCH transmissions exceed 13 symbols

In some embodiments, the UE 302 may use inter-slot frequency hopping and DMRS bundling for Msg4 HARQ-ACK repetitions. The UE 302 may determining hopping intervals based on the configured TDW or the actual TDW. Frequency hopping intervals refer to the frequency separation between two transmissions. In some embodiments, the frequency hopping interval may be configured using a separate configuration from the configured TDW length. In some embodiments, a joint configuration of the configured TDW length and the frequency hopping interval may be employed. If the frequency hopping interval is not configured, the UE 302 may use a default frequency hopping interval. The default frequency hopping interval may be the same as the configured TDW length. DMRS bundling may be restarted at the beginning of each frequency hop.

The UE 302 and the network node 304 may also determine an initial cyclic shift index for the Msg4 HARQ-ACK repetition 318. In some embodiments, the cyclic shift index sequence may be obtained using a table. For example, the UE 302 may obtain the cyclic shift index sequence as in Table 9.2.1-1 in TS38.213, based on the value of $r_{PUCCH}$, which may be obtained based on PUCCH resource indicator field in DCI, number of CCEs in a CORESET, and index of a first CCE for PDCCH reception. In some embodiments, the initial cyclic shift index for the first repetition is determined based on $r_{PUCCH} \bmod N_{CS}$, and the initial cyclic shift index for the remaining repetitions may follow the above cyclic shift index sequence. In some embodiments, the initial cyclic shift index for the first repetition is the first value in the cyclic shift index sequence, and the initial cyclic shift index for the remaining repetition follows the above cyclic shift index sequence.

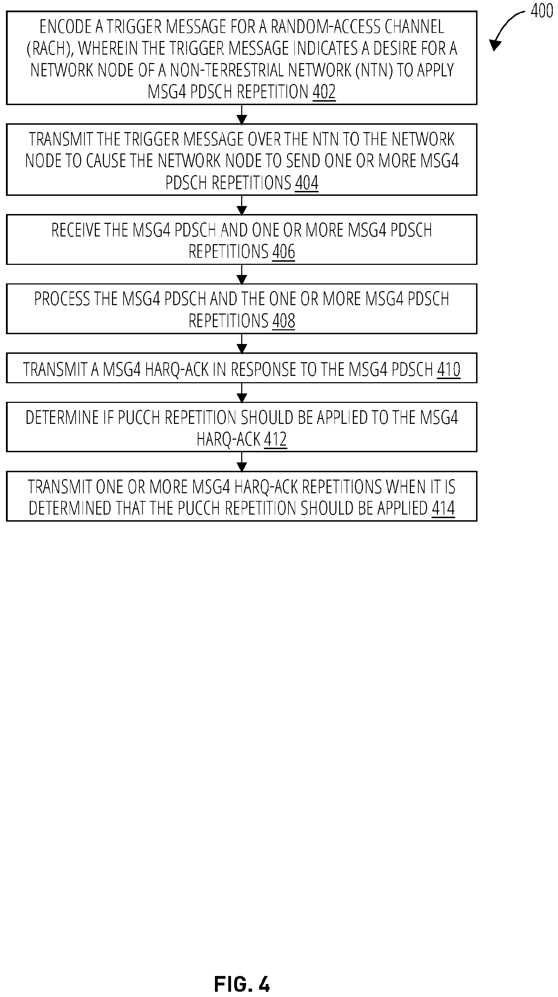

FIG. 4 illustrates a flow chart of a method 400 for a UE (e.g., the UE 302) to perform a RACH procedure with Msg4 repetitions. The UE encodes 402, a trigger message for a RACH, wherein the trigger message indicates a desire for a network node of a NTN to apply Msg4 PDSCH repetition. The UE transmits 404 the trigger message over the NTN to the network node to cause the network node to send one or more Msg4 PDSCH repetitions. The UE receives 406 the Msg4 PDSCH and one or more MSG4 PDSCH repetitions. The UE processes 408 the Msg4 PDSCH and the one or more MSG4 PDSCH repetitions. The UE transmits 410 a Msg4 HARQ-ACK in response to the MSG4 PDSCH. The UE may determine 412 if PUCCH repetition should be applied to the Msg4 HARQ-ACK. The UE may transmit 414 one or more Msg4 HARQ-ACK repetitions when it is determined that the PUCCH repetition should be applied.

Embodiments contemplated herein include an apparatus comprising means to perform one or more elements of the method 400. This apparatus may be, for example, an apparatus of a UE (such as a wireless device 702 that is a UE, as described herein).

Embodiments contemplated herein include one or more non-transitory computer-readable media comprising instructions to cause an electronic device, upon execution of the instructions by one or more processors of the electronic device, to perform one or more elements of the method 400. This non-transitory computer-readable media may be, for example, a memory of a UE (such as a memory 706 of a wireless device 702 that is a UE, as described herein).

Embodiments contemplated herein include an apparatus comprising logic, modules, or circuitry to perform one or more elements of the method 400. This apparatus may be, for example, an apparatus of a UE (such as a wireless device 702 that is a UE, as described herein).

Embodiments contemplated herein include an apparatus comprising: one or more processors and one or more computer-readable media comprising instructions that, when executed by the one or more processors, cause the one or more processors to perform one or more elements of the method 400. This apparatus may be, for example, an apparatus of a UE (such as a wireless device 702 that is a UE, as described herein).

Embodiments contemplated herein include a signal as described in or related to one or more elements of the method 400.

Embodiments contemplated herein include a computer program or computer program product comprising instructions, wherein execution of the program by a processor is to cause the processor to carry out one or more elements of the method 400. The processor may be a processor of a UE (such as a processor(s) 704 of a wireless device 702 that is a UE, as described herein). These instructions may be, for example, located in the processor and/or on a memory of the UE (such as a memory 706 of a wireless device 702 that is a UE, as described herein).

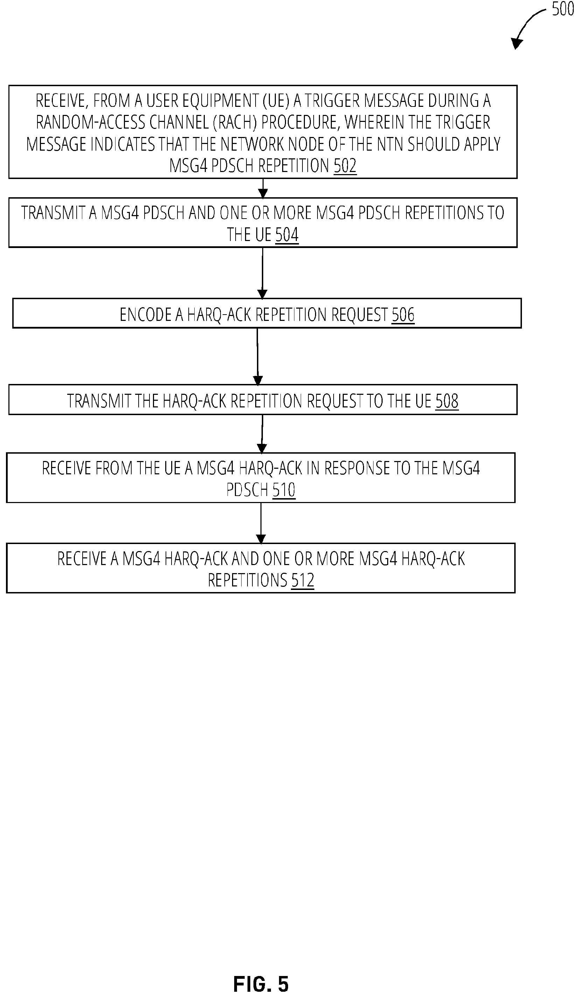

FIG. 5 illustrates a flow chart of a method 500 for a network node of a NTN (e.g., network node 304) to perform a RACH procedure with Msg4 repetitions. The network node receives 502 from a UE a trigger message during a RACH procedure, wherein the trigger message indicates that the network node of the NTN should apply Msg4 PDSCH repetition. The network node transmits 504 a Msg4 PDSCH and one or more MSG4 PDSCH repetitions to the UE based on the trigger message. The network node encodes 506 a HARQ-ACK repetition request, and transmits 508 the HARQ-ACK repetition request to the UE. The network node receives 510 a Msg4 HARQ-ACK and receives 512 one or more Msg4 HARQ-ACK repetitions.

Embodiments contemplated herein include an apparatus comprising means to perform one or more elements of the method 500. This apparatus may be, for example, an apparatus of a base station (such as a RAN device 718 that is a base station, as described herein).

Embodiments contemplated herein include one or more non-transitory computer-readable media comprising instructions to cause an electronic device, upon execution of the instructions by one or more processors of the electronic device, to perform one or more elements of the method 500. This non-transitory computer-readable media may be, for example, a memory of a base station (such as a memory 722 of a RAN device 718 that is a base station, as described herein).

Embodiments contemplated herein include an apparatus comprising logic, modules, or circuitry to perform one or more elements of the method 500. This apparatus may be, for example, an apparatus of a base station (such as a RAN device 718 that is a base station, as described herein).

Embodiments contemplated herein include an apparatus comprising: one or more processors and one or more computer-readable media comprising instructions that, when executed by the one or more processors, cause the one or more processors to perform one or more elements of the method 500. This apparatus may be, for example, an apparatus of a base station (such as a RAN device 718 that is a base station, as described herein).

Embodiments contemplated herein include a signal as described in or related to one or more elements of the method 500.

Embodiments contemplated herein include a computer program or computer program product comprising instructions, wherein execution of the program by a processing element is to cause the processing element to carry out one or more elements of methods described herein. The processor may be a processor of a base station (such as a processor(s) 720 of a RAN device 718 that is a base station, as described herein). These instructions may be, for example, located in the processor and/or on a memory of the base station (such as a memory 722 of a RAN device 718 that is a base station, as described herein).

FIG. 6 illustrates an example architecture of a wireless communication system 600, according to embodiments disclosed herein. The following description is provided for an example wireless communication system 600 that operates in conjunction with the LTE system standards and/or 5G or NR system standards as provided by 3GPP technical specifications.

As shown by FIG. 6, the wireless communication system 600 includes UE 602 and UE 604 (although any number of UEs may be used). In this example, the UE 602 and the UE 604 are illustrated as smartphones (e.g., handheld touchscreen mobile computing devices connectable to one or more cellular networks), but may also comprise any mobile or non-mobile computing device configured for wireless communication.

The UE 602 and UE 604 may be configured to communicatively couple with a RAN 606. In embodiments, the RAN 606 may be NG-RAN, E-UTRAN, etc. The UE 602 and UE 604 utilize connections (or channels) (shown as connection 608 and connection 610, respectively) with the RAN 606, each of which comprises a physical communications interface. The RAN 606 can include one or more base stations (such as terrestrial base station 612, the terrestrial base station 614 the satellite base station 636 and the satellite base station 638) and/or other entities (e.g., the satellite 642, which may not have base station functionality) that enable the connection 608 and connection 610. One or more satellite gateways 634 may integrate the satellite base station 636, satellite base station 638, and/or the satellite 642 into the RAN 606, in the manners (and with the appropriate elements) described in relation to the NTN architecture 100 of FIG. 1 and the NTN architecture 200 of FIG. 2.

In this example, the connection 608 and connection 610 are air interfaces to enable such communicative coupling, and may be consistent with RAT(s) used by the RAN 606, such as, for example, an LTE and/or NR. It is contemplated that the connection 608 and connection 610 may include, in some embodiments, service links between their respective UE 602, UE 604 and one or more of the satellite base station 636, the satellite base station 638, and the satellite 642.

In some embodiments, the UE 602 and UE 604 may also directly exchange communication data via a sidelink interface 616.

The UE 604 is shown to be configured to access an access point (shown as AP 618) via connection 620. By way of example, the connection 620 can comprise a local wireless connection, such as a connection consistent with any IEEE 802.11 protocol, wherein the AP 618 may comprise a Wi-Fi® router. In this example, the AP 618 may be connected to another network (for example, the Internet) without going through a CN 624.

In embodiments, the UE 602 and UE 604 can be configured to communicate using orthogonal frequency division multiplexing (OFDM) communication signals with each other, with the terrestrial base station 612, the terrestrial base station 614, the satellite base station 636, the satellite base station 638, and/or the satellite 642 over a multicarrier communication channel in accordance with various communication techniques, such as, but not limited to, an orthogonal frequency division multiple access (OFDMA) communication technique (e.g., for downlink communications) or a single carrier frequency division multiple access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, all or parts of the terrestrial base station 612, terrestrial base station 614, the satellite base station 636 and/or the satellite base station 638 may be implemented as one or more software entities running on server computers as part of a virtual network.

In addition, or in other embodiments, the terrestrial base station 612 or terrestrial base station 614 may be configured to communicate with one another via interface 622. In embodiments where the wireless communication system 600 is an LTE system (e.g., when the CN 624 is an EPC), the interface 622 may be an X2 interface. The X2 interface may be defined between two or more base stations (e.g., two or more eNBs and the like) that connect to an EPC, and/or between two eNBs connecting to the EPC. It is contemplated than an inter-satellite link (ISL) may carry the X2 interface between in the case of two satellite base stations.

In embodiments where the wireless communication system 600 is an NR system (e.g., when CN 624 is a 5GC), the interface 622 may be an Xn interface. An Xn interface is defined between two or more base stations that connect to 5GC (e.g., CN 624). For example, the Xn interface may be between two or more gNBs that connect to 5GC, a gNB connecting to 5GC and an eNB, between two eNBs connecting to 5GC, and/or two or more satellite base stations via an ISL (as in, e.g., the interface 640 between the satellite base station 636 and the satellite base station 638).

The RAN 606 is shown to be communicatively coupled to the CN 624. The CN 624 may comprise one or more network elements 626, which are configured to offer various data and telecommunications services to customers/subscribers (e.g., users of UE 602 and UE 604) who are connected to the CN 624 via the RAN 606. The components of the CN 624 may be implemented in one physical device or separate physical devices including components to read and execute instructions from a machine-readable or computer-readable medium (e.g., a non-transitory machine-readable storage medium). For example, the components of the CN 624 may be implemented in one or more processors and/or one or more associated memories.

In embodiments, the CN 624 may be an EPC, and the RAN 606 may be connected with the CN 624 via an S1 interface 628. In embodiments, the S1 interface 628 may be split into two parts, an S1 user plane (S1-U) interface, which carries traffic data between the terrestrial base station 612, terrestrial base station 614, the satellite base station 636, or the interface 640 and a serving gateway (S-GW), and the S1-MME interface, which is a signaling interface between the terrestrial base station 612, the terrestrial base station 614 the satellite base station 636, or the interface 640 and mobility management entities (MMEs).

In embodiments, the CN 624 may be a 5GC, and the RAN 606 may be connected with the CN 624 via an NG interface 628. In embodiments, the NG interface 628 may be split into two parts, an NG user plane (NG-U) interface, which carries traffic data between the terrestrial base station 612, terrestrial base station 614, satellite base station 636, or satellite base station 638 and a user plane function (UPF), and the S1 control plane (NG-C) interface, which is a signaling interface between the terrestrial base station 612, terrestrial base station 614 satellite base station 636, or satellite base station 638 and access and mobility management functions (AMFs).

Generally, an application server 630 may be an element offering applications that use internet protocol (IP) bearer resources with the CN 624 (e.g., packet switched data services). The application server 630 can also be configured to support one or more communication services (e.g., VoIP sessions, group communication sessions, etc.) for the UE 602 and UE 604 via the CN 624. The application server 630 may communicate with the CN 624 through an IP communications interface 632.

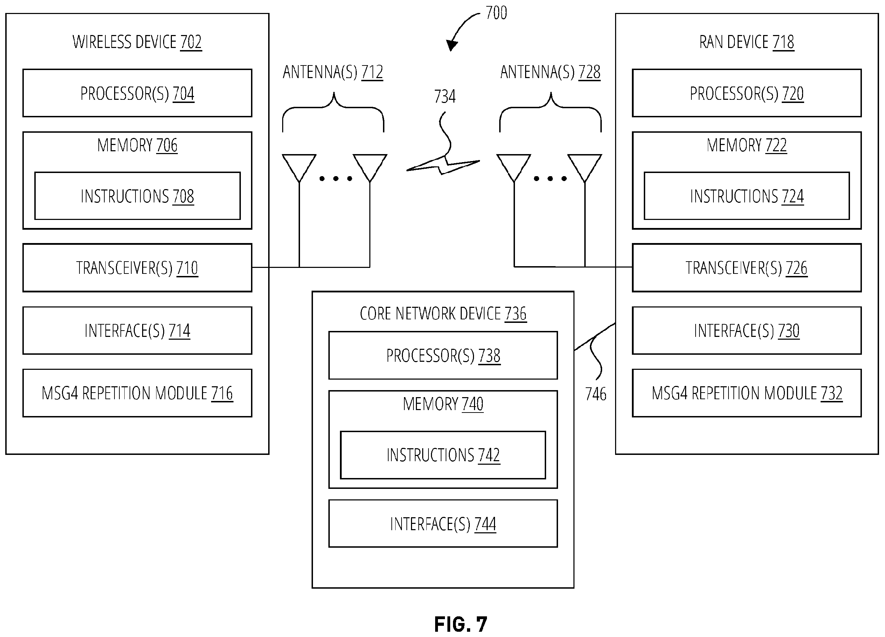

FIG. 7 illustrates a system 700 for performing signaling 734 between a wireless device 702 and a RAN device 718 connected to a core network of a CN device 736, according to embodiments disclosed herein. The system 700 may be a portion of a wireless communications system as herein described. The wireless device 702 may be, for example, a UE of a wireless communication system. The RAN device 718 may be, for example, a base station (e.g., an eNB or a gNB) of a wireless communication system that is a terrestrial base station or a satellite base station. In the case of a RAN device 718 that is a terrestrial base station, the RAN device 718 may be in communication with a satellite that directly provides radio access connectivity to a UE, in the manner described herein. The CN device 736 may be one or more devices making up a CN, as described herein.

The wireless device 702 may include one or more processor(s) 704. The processor(s) 704 may execute instructions such that various operations of the wireless device 702 are performed, as described herein. The processor(s) 704 may include one or more baseband processors implemented using, for example, a central processing unit (CPU), a digital signal processor (DSP), an application specific integrated circuit (ASIC), a controller, a field programmable gate array (FPGA) device, another hardware device, a firmware device, or any combination thereof configured to perform the operations described herein.

The wireless device 702 may include a memory 706. The memory 706 may be a non-transitory computer-readable storage medium that stores instructions 708 (which may include, for example, the instructions being executed by the processor(s) 704). The instructions 708 may also be referred to as program code or a computer program. The memory 706 may also store data used by, and results computed by, the processor(s) 704.

The wireless device 702 may include one or more transceiver(s) 710 that may include radio frequency (RF) transmitter and/or receiver circuitry that use the antenna(s) 712 of the wireless device 702 to facilitate signaling (e.g., the signaling 734) to and/or from the wireless device 702 with other devices (e.g., the RAN device 718) according to corresponding RATs. In some embodiments, the antenna(s) 712 may include a moving parabolic antenna, an omni-directional phased-array antenna, or some other antenna suitable for communication with a satellite, (e.g., as described above in relation to the UE 110 of FIG. 1 and the UE 208 of FIG. 2).

For a RAN device 718 that is a terrestrial base station, the network device signaling 734 may occur on a feeder link between the wireless device 702 and a satellite and a service link between the satellite and the RAN device 718 (e.g., as described in relation to FIG. 1). For a RAN device 718 that is a satellite base station, the signaling 734 may occur on a feeder link between the wireless device 702 and the RAN device 718 (e.g., as described in relation to FIG. 2).

The wireless device 702 may include one or more antenna(s) 712 (e.g., one, two, four, or more). For embodiments with multiple antenna(s) 712, the wireless device 702 may leverage the spatial diversity of such multiple antenna(s) 712 to send and/or receive multiple different data streams on the same time and frequency resources. This behavior may be referred to as, for example, multiple input multiple output (MIMO) behavior (referring to the multiple antennas used at each of a transmitting device and a receiving device that enable this aspect). MIMO transmissions by the wireless device 702 may be accomplished according to precoding (or digital beamforming) that is applied at the wireless device 702 that multiplexes the data streams across the antenna(s) 712 according to known or assumed channel characteristics such that each data stream is received with an appropriate signal strength relative to other streams and at a desired location in the spatial domain (e.g., the location of a receiver associated with that data stream). Certain embodiments may use single user MIMO (SU-MIMO) methods (where the data streams are all directed to a single receiver) and/or multi user MIMO (MU-MIMO) methods (where individual data streams may be directed to individual (different) receivers in different locations in the spatial domain).

In certain embodiments having multiple antennas, the wireless device 702 may implement analog beamforming techniques, whereby phases of the signals sent by the antenna(s) 712 are relatively adjusted such that the (joint) transmission of the antenna(s) 712 can be directed (this is sometimes referred to as beam steering).

The wireless device 702 may include one or more interface(s) 714. The interface(s) 714 may be used to provide input to or output from the wireless device 702. For example, a wireless device 702 that is a UE may include interface(s) 714 such as microphones, speakers, a touchscreen, buttons, and the like in order to allow for input and/or output to the UE by a user of the UE. Other interfaces of such a UE may be made up of transmitters, receivers, and other circuitry (e.g., other than the transceiver(s) 710/antenna(s) 712 already described) that allow for communication between the UE and other devices and may operate according to known protocols (e.g., Wi-Fi®, Bluetooth®, and the like).

The wireless device 702 may include a Msg4 repetition module 716. The Msg4 repetition module 716 may be implemented via hardware, software, or combinations thereof. For example, the Msg4 repetition module 716 may be implemented as a processor, circuit, and/or instructions 708 stored in the memory 706 and executed by the processor(s) 704. In some examples, the Msg4 repetition module 716 may be integrated within the processor(s) 704 and/or the transceiver(s) 710. For example, the Msg4 repetition module 716 may be implemented by a combination of software components (e.g., executed by a DSP or a general processor) and hardware components (e.g., logic gates and circuitry) within the processor(s) 704 or the transceiver(s) 710.

The Msg4 repetition module 716 may be used for various aspects of the present disclosure, for example, aspects of FIG. 3 through FIG. 4. The Msg4 repetition module 716 is configured to, for example, send a request to apply repetition for Msg4 PDSCH.

The RAN device 718 may include one or more processor(s) 720. The processor(s) 720 may execute instructions such that various operations of the RAN device 718 are performed, as described herein. The processor(s) 704 may include one or more baseband processors implemented using, for example, a CPU, a DSP, an ASIC, a controller, an FPGA device, another hardware device, a firmware device, or any combination thereof configured to perform the operations described herein.

The RAN device 718 may include a memory 722. The memory 722 may be a non-transitory computer-readable storage medium that stores instructions 724 (which may include, for example, the instructions being executed by the processor(s) 720). The instructions 724 may also be referred to as program code or a computer program. The memory 722 may also store data used by, and results computed by, the processor(s) 720.

The RAN device 718 may include one or more transceiver(s) 726 that may include RF transmitter and/or receiver circuitry that use the antenna(s) 728 of the RAN device 718 to facilitate signaling (e.g., the signaling 734) to and/or from the RAN device 718 with other devices (e.g., the wireless device 702) according to corresponding RATs.

The RAN device 718 may include one or more antenna(s) 728 (e.g., one, two, four, or more). In embodiments having multiple antenna(s) 728, the RAN device 718 may perform MIMO, digital beamforming, analog beamforming, beam steering, etc., as has been described.

For a RAN device 718 that is a terrestrial base station, one or more of the transceiver(s) 726 and/or the antenna(s) 728 may instead be present on a satellite gateway associated with the base station (e.g., as shown in reference to the terrestrial base station 104 and the satellite gateway 106 of FIG. 1). For a RAN device 718 that is a satellite base station, the transceiver(s) 726 and/or the antenna(s) 728 may be present on the satellite, and one or more of those antenna(s) 728 may be antenna(s) appropriate for satellite communication (such as a moving parabolic antenna, an omni-directional phased-array antenna, etc.)

The RAN device 718 may include one or more interface(s) 730. The interface(s) 730 may be used to provide input to or output from the RAN device 718. For example, a RAN device 718 that is a base station may include interface(s) 730 made up of transmitters, receivers, and other circuitry (e.g., other than the transceiver(s) 726/antenna(s) 728 already described) that enables the base station to communicate with other equipment in a CN, and/or that enables the base station to communicate with external networks, computers, databases, and the like for purposes of operations, administration, and maintenance of the base station or other equipment operably connected thereto.

The RAN device 718 may include a Msg4 repetition module 732. The Msg4 repetition module 732 may be implemented via hardware, software, or combinations thereof. For example, the Msg4 repetition module 732 may be implemented as a processor, circuit, and/or instructions 724 stored in the memory 722 and executed by the processor(s) 720. In some examples, the Msg4 repetition module 732 may be integrated within the processor(s) 720 and/or the transceiver(s) 726. For example, the Msg4 repetition module 732 may be implemented by a combination of software components (e.g., executed by a DSP or a general processor) and hardware components (e.g., logic gates and circuitry) within the processor(s) 720 or the transceiver(s) 726.

The Msg4 repetition module 732 may be used for various aspects of the present disclosure, for example, aspects of FIG. 3 and FIG. 5. The Msg4 repetition module 732 is configured to, for example, generate and/or transmit Msg4 PDSCH repetitions.

The RAN device 718 may communicate with the CN device 736 via the interface 746, which may be analogous to the interface 628 of FIG. 6 (e.g., may be an S1 and/or NG interface, either of which may be split into user plane and control plane parts).

The CN device 736 may include one or more processor(s) 738. The processor(s) 738 may execute instructions such that various operations of the CN device 736 are performed, as described herein. The processor(s) 738 may include one or more baseband processors implemented using, for example, a CPU, a DSP, an ASIC, a controller, an FPGA device, another hardware device, a firmware device, or any combination thereof configured to perform the operations described herein.

The CN device 736 may include a memory 740. The memory 740 may be a non-transitory computer-readable storage medium that stores instructions 742 (which may include, for example, the instructions being executed by the processor(s) 738). The instructions 742 may also be referred to as program code or a computer program. The memory 740 may also store data used by, and results computed by, the processor(s) 738.

The CN device 736 may include one or more interface(s) 744. The interface(s) 744 may be used to provide input to or output from the CN device 736. For example, a CN device 736 may include interface(s) 730 made up of transmitters, receivers, and other circuitry that enables the CN device 736 to communicate with other equipment in the CN, and/or that enables the CN device 736 to communicate with external networks, computers, databases, and the like for purposes of operations, administration, and maintenance of the CN device 736 or other equipment operably connected thereto.

For one or more embodiments, at least one of the components set forth in one or more of the preceding figures may be configured to perform one or more operations, techniques, processes, and/or methods as set forth herein. For example, a baseband processor as described herein in connection with one or more of the preceding figures may be configured to operate in accordance with one or more of the examples set forth herein. For another example, circuitry associated with a UE, base station, network element, etc. as described above in connection with one or more of the preceding figures may be configured to operate in accordance with one or more of the examples set forth herein.

Any of the above described embodiments may be combined with any other embodiment (or combination of embodiments), unless explicitly stated otherwise. The foregoing description of one or more implementations provides illustration and description, but is not intended to be exhaustive or to limit the scope of embodiments to the precise form disclosed. Obvious modifications and variations are possible in light of the above teachings or may be acquired from practice of various embodiments.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

It should be recognized that the systems described herein include descriptions of specific embodiments. These embodiments can be combined into single systems, partially combined into other systems, split into multiple systems or divided or combined in other ways. In addition, it is contemplated that parameters, attributes, aspects, etc. of one embodiment can be used in another embodiment. The parameters, attributes, aspects, etc. are merely described in one or more embodiments for clarity, and it is recognized that the parameters, attributes, aspects, etc. can be combined with or substituted for parameters, attributes, aspects, etc. of another embodiment unless specifically disclaimed herein.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Although the foregoing has been described in some detail for purposes of clarity, it will be apparent that certain obvious changes and modifications may be made without departing from the principles thereof. It should be noted that there are many alternative ways of implementing both the processes and apparatuses described herein. Accordingly, the present embodiments are to be considered illustrative and not restrictive, and the description is not to be limited to the details given herein, but may be modified within the scope of the appended claims.

**Claims**

1. A method performed by a user equipment, UE, the method comprising:

   encoding (400) a trigger message for a random-access channel, RACH, procedure, wherein the trigger message indicates a desire for a network node of a non-terrestrial network, NTN, to apply Msg4 Physical Downlink Shared Channel, PDSCH, repetition;
   transmitting (404) the trigger message over the NTN to the network node to cause the network node to send one or more Msg4 PDSCH repetitions;
   receiving (406) a Msg4 PDSCH and one or more Msg4 PDSCH repetitions, wherein the one or more Msg4 PDSCH repetitions comprise contention resolution information that is sent via the Msg4 PDSCH, wherein the one or more Msg4 PDSCH repetitions are sent at a different time than the Msg4 PDSCH;
   processing (408) the Msg4 PDSCH and the one or more Msg4 PDSCH repetitions; and
   transmitting (410) a Msg4 HARQ-ACK in response to the Msg4 PDSCH, wherein the method is **characterized by** having a minimum time between a last symbol of a last Msg4 PDSCH repetition and a first symbol of a corresponding PUCCH transmission with the Msg4 HARQ-ACK is based on a number of the one or more Msg4 PDSCH repetitions.

2. The method of claim 1, wherein the trigger message comprises a dedicated physical random access channel, PRACH, preamble.

3. The method of claim 1, wherein the trigger message comprises a physical random access channel, PRACH, sent on dedicated RACH occasions which request Msg4 PDSCH repetition.

4. The method of any preceding claim, wherein the trigger message causes both a Msg2 repetition and the Msg4 PDSCH repetition.

5. The method of any preceding claim, wherein a Physical Uplink Control Channel, PUCCH, slot for the Msg4 HARQ-ACK starts after a last nominal PDSCH transmission slot, or after a last actual PDSCH transmission slot.

6. The method of any preceding claim, wherein an MCS field in a 3GPP downlink control information, DCI, 1_0 for Msg4 is used to indicate a number of Msg4 PDSCH repetitions, or wherein a PDSCH time domain resource assignment, TDRA, indication is used to indicate a number of Msg4 PDSCH repetitions, or wherein a new field in a 3GPP downlink control information, DCI, 1_0 format is used to indicate a number of Msg4 PDSCH repetitions.

7. The method of any preceding claim, further comprising:

   determining if PUCCH repetition should be applied to the Msg4 HARQ-ACK; and
   transmitting one or more Msg4 HARQ-ACK repetitions when it is determined that the PUCCH repetition should be applied, wherein the one or more Msg4 HARQ-ACK repetitions are triggered based on Msg4 PDSCH repetition, physical random access channel, PRACH, preamble, RACH occasions, or Msg3 repetition.

8. The method of claim 7, further comprising supporting demodulation reference signal, DMRS, bundling across the one or more Msg4 HARQ-ACK repetitions.

9. A method performed by a network node of a nonterrestrial network, NTN, the method comprising:

   receiving (502), from a user equipment, UE, a trigger message during a random-access channel, RACH, procedure, wherein the trigger message indicates that the network node of the NTN should apply Msg4 Physical Downlink Shared Channel, PDSCH, repetition;
   transmitting (504) a Msg4 PDSCH and one or more Msg4 PDSCH repetitions to the UE, wherein the one or more Msg4 PDSCH repetitions comprise contention resolution information that is sent via the Msg4 PDSCH, wherein the one or more Msg4 PDSCH repetitions are sent at a different time than the Msg4 PDSCH; and
   receiving (510) from the UE a Msg4 HARQ-ACK in response to the Msg4 PDSCH, wherein the method is **characterized by** having a minimum time between a last symbol of a last Msg4 PDSCH repetition and a first symbol of a corresponding PUCCH transmission with the Msg4 HARQ-ACK is based on a number of the one or more Msg4 PDSCH repetitions.

10. The method of claim 9, wherein the trigger message comprises a dedicated physical random access channel, PRACH, preamble.

11. The method of claim 9, further comprising:

   encoding a HARQ-ACK repetition request, wherein the repetition request comprises a Msg4 PDSCH repetition indication, physical random access channel, PRACH, preamble, RACH occasions, or Msg3 repetition indication; transmitting the HARQ-ACK repetition request to the UE; and
   receiving a Msg4 HARQ-ACK and one or more Msg4 HARQ-ACK repetitions.

12. The method of claim 11, further comprising supporting demodulation reference signal, DMRS, bundling across the one or more Msg4 HARQ-ACK repetitions.

13. An apparatus (702, 718) comprising means to perform the method of any of claim 1 to claim 12

14. A computer-readable media comprising instructions to cause an electronic device, upon execution of the instructions by one or more processors of the electronic device, to perform the method of any of claim 1 to claim 12.

**Patentansprüche**

1. Verfahren, das von einem Benutzergerät, UE, durchgeführt wird, wobei das Verfahren Folgendes umfasst: Codieren (400) einer Auslösenachricht für eine Direktzugriffskanal-, RACH-, Prozedur, wobei die Auslösenachricht einen Wunsch für einen Netzknoten eines nichtterrestrischen Netzes, NTN, angibt, eine Wiederholung eines Msg4 gemeinsam genutzten physikalischen Downlink-Kanals, PDSCH, anzuwenden; Übertragen (404) der Auslösenachricht des NTN an den Netzknoten, um den Netzknoten zu veranlassen, eine oder mehrere Msg4-PDSCH-Wiederholungen zu senden; Empfangen (406) eines Msg4-PDSCH und einer oder mehrerer Msg4-PDSCH-Wiederholungen, wobei die eine oder die mehreren Msg4-PDSCH-Wiederholungen Konkurrenzauflösungsinformation umfassen, die über den Msg4-PDSCH gesendet wird, wobei die eine oder die mehreren Msg4-PDSCH-Wiederholungen zu einer anderen Zeit als der Msg4-PDSCH gesendet werden; Verarbeiten (408) des Msg4-PDSCH und der einen oder der mehreren Msg4-PDSCH-Wiederholungen; und Übertragen (410) einer Msg4-HARQ-ACK als Reaktion auf den Msg4-PDSCH, wobei das Verfahren **dadurch gekennzeichnet ist, dass** eine minimale Zeit zwischen einem letzten Symbol einer letzten Msg4-PDSCH-Wiederholung und einem ersten Symbol einer entsprechenden PUCCH-Übertragung mit der Msg4-HARQ-ACK auf einer Anzahl der einen oder der mehreren Msg4-PDSCH-Wiederholungen basiert.

2. Verfahren nach Anspruch 1, wobei die Auslösenachricht eine dedizierte physikalische Direktzugriffskanal-, PRACH-, Präambel umfasst.

3. Verfahren nach Anspruch 1, wobei die Auslösenachricht einen physikalischen Direktzugriffskanal, PRACH, umfasst, der auf dedizierten RACH-Gelegenheiten gesendet wird, die eine Msg4-PDSCH-Wiederholung anfordern.

4. Verfahren nach einem der vorhergehenden Ansprüche, wobei die Auslösenachricht sowohl eine Msg2-Wiederholung als auch die Msg4-PDSCH-Wiederholung bewirkt.

5. Verfahren nach einem der vorhergehenden Ansprüche, wobei ein physikalischer Uplink-Steuerkanal-, PUCCH-, Schlitz für die Msg4-HARQ-ACK nach einem letzten nominalen PDSCH-Übertragungsschlitz oder nach einem letzten tatsächlichen PDSCH-Übertragungsschlitz beginnt.

6. Verfahren nach einem der vorhergehenden Ansprüche, wobei ein MCS-Feld in einer 3GPP-Downlink-Steuerinformation, DCI, 1_o für Msg4 verwendet wird, um eine Anzahl von Msg4-PDSCH-Wiederholungen anzugeben, oder wobei eine PDSCH-Zeitdomänenressourcenzuweisungs-, TDRA-, Angabe verwendet wird, um eine Anzahl von Msg4-PDSCH-Wiederholungen anzugeben, oder wobei ein neues Feld in einem 3GPP-Downlink-Steuerinformations-, DCI, 1_o-Format verwendet wird, um eine Anzahl von Msg4-PDSCH-Wiederholungen anzugeben.

7. Verfahren nach einem der vorhergehenden Ansprüche, ferner umfassend: Bestimmen, ob eine PUCCH-Wiederholung auf die Msg4-HARQ-ACK angewendet werden sollte; und Übertragen einer oder mehrerer Msg4-HARQ-ACK-Wiederholungen, wenn bestimmt wird, dass die PUCCH-Wiederholung angewendet werden sollte, wobei die eine oder die mehreren Msg4-HARQ-ACK-Wiederholungen basierend auf einer Msg4-PDSCH-Wiederholung, einer physikalischen Direktzugriffskanal-, PRACH-, Präambel, RACH-Gelegenheiten oder einer Msg3-Wiederholung ausgelöst werden.

8. Verfahren nach Anspruch 7, ferner umfassend Unterstützen einer Demodulationsreferenzsignal-, DMRS-, Bündelung über die eine oder die mehreren Msg4-HARQ-ACK-Wiederholungen.

9. Verfahren, das von einem Netzknoten eines nichtterrestrischen Netzes, NTN, durchgeführt wird, wobei das Verfahren Folgendes umfasst: Empfangen (502), von einem Benutzergerät, UE, einer Auslösenachricht während einer Direktzugriffskanal-, RACH-, Prozedur, wobei die Auslösenachricht angibt, dass der Netzknoten des NTN eine Wiederholung eines Msg4 gemeinsam genutzten physikalischen Downlink-Kanals, PDSCH, anwenden sollte; Übertragen (504) eines Msg4-PDSCH und einer oder mehrerer Msg4-PDSCH-Wiederholungen an das UE, wobei die eine oder die mehreren Msg4-PDSCH-Wiederholungen Konkurrenzauflösungsinformation umfassen, die über den Msg4-PDSCH gesendet wird, wobei die eine oder die mehreren Msg4-PDSCH-Wiederholungen zu einer anderen Zeit als der Msg4-PDSCH gesendet werden; und Empfangen (510), von dem UE, einer Msg4-HARQ-ACK als Reaktion auf den Msg4-PDSCH, wobei das Verfahren **dadurch gekennzeichnet ist, dass** eine minimale Zeit zwischen einem letzten Symbol einer letzten Msg4-PDSCH-Wiederholung und einem ersten Symbol einer entsprechenden PUCCH-Übertragung mit der Msg4-HARQ-ACK auf einer Anzahl der einen oder der mehreren Msg4-PDSCH-Wiederholungen basiert.

10. Verfahren nach Anspruch 9, wobei die Auslösenachricht eine dedizierte physikalische Direktzugriffskanal-, PRACH-, Präambel umfasst.

11. Verfahren nach Anspruch 9, ferner umfassend: Codieren einer HARQ-ACK-Wiederholungsanforderung, wobei die Wiederholungsanforderung eine Msg4-PDSCH-Wiederholungsangabe, eine physikalische Direktzugriffskanal-, PRACH-, Präambel, RACH-Gelegenheiten oder eine Msg3-Wiederholungsangabe umfasst; Übertragen der HARQ-ACK-Wiederholungsanforderung an das UE; und Empfangen einer Msg4-HARQ-ACK und einer oder mehrerer Msg4-HARQ-ACK-Wiederholungen.

12. Verfahren nach Anspruch 11, ferner umfassend Unterstützen einer Demodulationsreferenzsignal-, DMRS-, Bündelung über die eine oder die mehreren Msg4-HARQ-ACK-Wiederholungen.

13. Vorrichtung (702, 718), umfassend Mittel zum Durchführen des Verfahrens nach einem der Ansprüche 1 bis 12.

14. Computerlesbares Medium, umfassend Anweisungen, um eine elektronische Vorrichtung bei Ausführung der Anweisungen durch einen oder mehrere Prozessoren der elektronischen Vorrichtung zu veranlassen, das Verfahren nach einem der Ansprüche 1 bis 12 durchzuführen.

**Revendications**

1. Un procédé réalisé par un équipement utilisateur, UE, le procédé comprenant :

le codage (400) d'un message de déclenchement pour une procédure de canal d'accès aléatoire, RACH, dans lequel le message de déclenchement indique un souhait qu'un nœud de réseau d'un réseau non terrestre, NTN, applique une répétition de canal physique partagé de liaison descendante, PDSCH, Msg4 ;
la transmission (404) du message de déclenchement sur le NTN au nœud de réseau pour amener le nœud de réseau à envoyer une ou plusieurs répétitions de PDSCH Msg4 ;
la réception (406) d'un PDSCH Msg4 et d'une ou plusieurs répétitions de PDSCH Msg4, dans lequel les une ou plusieurs répétitions de PDSCH Msg4 comprennent des informations de résolution de contention qui sont envoyées via le PDSCH Msg4, dans lequel les une ou plusieurs répétitions de PDSCH Msg4 sont envoyées à un instant différent par rapport au PDSCH Msg4 ;
le traitement (408) du PDSCH Msg4 et des une ou plusieurs répétitions de PDSCH Msg4 ; et
la transmission (410) d'un ACK-HARQ Msg4 en réponse au PDSCH Msg4, dans lequel le procédé est caractérisé en ayant un temps minimum entre un dernier symbole d'une dernière répétition de PDSCH Msg4 et un premier symbole d'une transmission PUCCH correspondante avec le ACK-HARQ Msg4 qui est basé sur un nombre des une ou plusieurs répétitions de PDSCH Msg4.

2. Le procédé selon la revendication 1, dans lequel le message de déclenchement comprend un préambule de canal physique d'accès aléatoire, PRACH, dédié.

3. Le procédé selon la revendication 1, dans lequel le message déclencheur comprend un canal physique d'accès aléatoire, PRACH, envoyé sur des occasions RACH dédiées qui requièrent une répétition de PDSCH Msg4.

4. Le procédé selon une revendication précédente, dans lequel le message de déclenchement entraîne à la fois une répétition de Msg2 et la répétition de PDSCH Msg4.

5. Le procédé selon une revendication précédente, dans lequel un slot de canal physique de contrôle de liaison montante, PUCCH, pour l'ACK-HARQ Msg4 démarre après un dernier slot de transmission PDSCH nominal, ou après un dernier slot de transmission PDSCH réel.

6. Le procédé selon une revendication précédente, dans lequel un champ MCS dans une information de contrôle de liaison descendante, DCI, 3GPP 1_0 pour Msg4 est utilisé pour indiquer un nombre de répétitions de PDSCH Msg4, ou dans lequel une indication d'attribution de ressource de domaine temporel, TDRA, PDSCH est utilisée pour indiquer un nombre de répétitions de PDSCH Msg4, ou dans lequel un nouveau champ dans un format 1_0 d'information de contrôle de liaison descendante, DCI, 3GPP est utilisé pour indiquer un nombre de répétitions de PDSCH Msg4.

7. Le procédé selon une revendication précédente, comprenant en outre :

la détermination si une répétition de PUCCH doit être appliquée à l'ACK-HARQ Msg4 ; et
la transmission d'une ou plusieurs répétitions d'ACK-HARQ Msg4 lorsqu'il est déterminé que la répétition de PUCCH doit être appliquée, dans lequel les une ou plusieurs répétitions d'ACK-HARQ Msg4 sont déclenchées sur la base d'une répétition de PDSCH Msg4, d'un préambule de canal physique d'accès aléatoire, PRACH, d'occasions RACH ou d'une répétition de Msg3.

8. Le procédé selon la revendication 7, comprenant en outre la prise en charge d'un regroupement de signal de référence de démodulation, DMRS, sur les une ou plusieurs répétitions d'ACK-HARQ Msg4.

9. Un procédé réalisé par un nœud de réseau d'un réseau non terrestre, NTN, le procédé comprenant :

la réception (502), à partir d'un équipement utilisateur, UE, d'un message de déclenchement pendant une procédure de canal d'accès aléatoire, RACH, dans lequel le message de déclenchement indique que le nœud de réseau du NTN doit appliquer une répétition de canal physique partagé de liaison descendante, PDSCH, Msg4 ;
la transmission (504) d'un PDSCH Msg4 et d'une ou plusieurs répétitions de PDSCH Msg4 à l'UE, dans lequel les une ou plusieurs répétitions de PDSCH Msg4 comprennent des informations de résolution de contention qui sont envoyées via le PDSCH Msg4, dans lequel les une ou plusieurs répétitions de PDSCH Msg4 sont envoyées à un instant différent par rapport au PDSCH Msg4 ; et
la réception (510), à partir de l'UE, d'un ACK-HARQ Msg4 en réponse au PDSCH Msg4, dans lequel le procédé est caractérisé en ayant un temps minimum entre un dernier symbole d'une dernière répétition de PDSCH Msg4 et un premier symbole d'une transmission PUCCH correspondante avec le ACK-HARQ Msg4 qui est basé sur un nombre des une ou plusieurs répétitions de PDSCH Msg4.

10. Le procédé selon la revendication 9, dans lequel le message de déclenchement comprend un préambule de canal physique d'accès aléatoire, PRACH, dédié.

11. Le procédé selon la revendication 9, comprenant en outre :

le codage d'une requête de répétition d'ACK-HARQ, dans lequel la requête de répétition comprend une indication de répétition de PDSCH Msg4, un canal physique d'accès aléatoire, PRACH, un préambule, des occasions RACH ou une indication de répétition de Msg3 ; la transmission de la requête de répétition d'ACK-HARQ à l'UE ; et la réception d'un ACK-HARQ Msg4 et d'une ou plusieurs répétitions d'ACK-HARQ Msg4.

12. Le procédé selon la revendication 11, comprenant en outre la prise en charge d'un regroupement de signal de référence de démodulation, DMRS, sur les une ou plusieurs répétitions d'ACK-HARQ Msg4.

13. Un appareil (702, 718) comprenant des moyens pour réaliser le procédé selon l'une des revendications 1 à 12.

14. Un support lisible par calculateur comprenant des instructions pour amener un dispositif électronique, lors de l'exécution des instructions par un ou plusieurs processeurs du dispositif électronique, à réaliser le procédé selon l'une des revendications 1 à 12.

FIG. 1

**FIG. 2**

FIG. 3

400

ENCODE A TRIGGER MESSAGE FOR A RANDOM-ACCESS CHANNEL (RACH), WHEREIN THE TRIGGER MESSAGE INDICATES A DESIRE FOR A NETWORK NODE OF A NON-TERRESTRIAL NETWORK (NTN) TO APPLY MSG4 PDSCH REPETITION 402

TRANSMIT THE TRIGGER MESSAGE OVER THE NTN TO THE NETWORK NODE TO CAUSE THE NETWORK NODE TO SEND ONE OR MORE MSG4 PDSCH REPETITIONS 404

RECEIVE THE MSG4 PDSCH AND ONE OR MORE MSG4 PDSCH REPETITIONS 406

PROCESS THE MSG4 PDSCH AND THE ONE OR MORE MSG4 PDSCH REPETITIONS 408

TRANSMIT A MSG4 HARQ-ACK IN RESPONSE TO THE MSG4 PDSCH 410

DETERMINE IF PUCCH REPETITION SHOULD BE APPLIED TO THE MSG4 HARQ-ACK 412

TRANSMIT ONE OR MORE MSG4 HARQ-ACK REPETITIONS WHEN IT IS DETERMINED THAT THE PUCCH REPETITION SHOULD BE APPLIED 414

**FIG. 4**

500

```
RECEIVE, FROM A USER EQUIPMENT (UE) A TRIGGER MESSAGE DURING A
RANDOM-ACCESS CHANNEL (RACH) PROCEDURE, WHEREIN THE TRIGGER
MESSAGE INDICATES THAT THE NETWORK NODE OF THE NTN SHOULD APPLY
MSG4 PDSCH REPETITION 502
```

```
TRANSMIT A MSG4 PDSCH AND ONE OR MORE MSG4 PDSCH REPETITIONS TO
THE UE 504
```

```
ENCODE A HARQ-ACK REPETITION REQUEST 506
```

```
TRANSMIT THE HARQ-ACK REPETITION REQUEST TO THE UE 508
```

```
RECEIVE FROM THE UE A MSG4 HARQ-ACK IN RESPONSE TO THE MSG4
PDSCH 510
```

```
RECEIVE A MSG4 HARQ-ACK AND ONE OR MORE MSG4 HARQ-ACK
REPETITIONS 512
```

**FIG. 5**

**FIG. 6**

EP 4 548 515 B1

**FIG. 7**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022210806 A1
- WO 2021231816 A1
- WO 2022061881 A1
- WO 2022151376 A1
- US 2021251016 A1